# EUROPEAN PATENT APPLICATION

(11) **EP 4 725 776 A1**
(43) Date of publication of application: **15.04.2026**
(21) Application number: 23948738.2
(22) Date of filing: 11.08.2023
(51) Int. Cl.: B60S 1/60, B60S 1/46, B60S 1/54

(54) **VEHICLE, CLEANING CONTROL METHOD, READABLE STORAGE MEDIUM, AND CONTROL SYSTEM**

(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHAO, Xiaonan, Ningbo, Zhejiang 315899 (CN); ZHOU, Jinbo, Ningbo, Zhejiang 315899 (CN); MAO, Yun, Ningbo, Zhejiang 315899 (CN); GOU, Tao, Ningbo, Zhejiang 315899 (CN)
(74) Representative: Michalski Hüttermann & Partner Patentanwälte mbB
(86) International application number: PCT/CN2023/112703
(87) International publication number: WO 2025/035303

(57) **Abstract**

A cleaning control method for a vehicle. A vehicle (111) comprises a vehicle body (112), a cleaning system (114) provided on the vehicle body, an air cooling system (115) provided on the vehicle body, and a camera (116) provided outside the vehicle body. The cleaning control method comprises: controlling a camera to acquire a first image; if the definition of the first image is less than set standard definition, controlling a cleaning system to clean the camera; after the camera is cleaned, controlling the camera again to acquire a second image; if the definition of the second image is greater than or equal to definition before drying, controlling an air cooling system to dry the camera; and if the definition of the second image is less than the definition before drying, controlling the cleaning system to clean the camera again. Also provided are a readable storage medium, a control system, and a vehicle. The cleaning control method facilitates improvement of the working accuracy of the camera, and thus improves the automatic cleaning efficiency of the vehicle.

## Description

### TECHNICAL FIELD

The present disclosure relates to the field of vehicle autonomous driving and cleaning technologies, and in particular to a vehicle, a cleaning control method, a readable storage medium, and a control system.

### BACKGROUND

With the steady development of data acquisition technology and sensing technology of autonomous vehicles, the autonomous vehicles have been able to realize unmanned driving in specific scenarios, that is, automatic driving. Vehicles are easily affected by external stains such as dust and insects during automatic driving and manual driving, thus affecting the vision of vehicle driving. At present, the cleaning of vehicles is mostly based on human operation. Drivers find vehicles dirty, trigger cleaning actions, and detect whether they are clean, which has certain subjective inaccuracies.

### SUMMARY

In view of this, one of the objectives of the present disclosure provides a vehicle, a cleaning control method, a readable storage medium, and a control system.

In an embodiment, there is provided a cleaning control method for a vehicle including a vehicle body, a cleaning system provided on the vehicle body, an air-cooling system provided on the vehicle body and a camera provided outside the vehicle body, and the cleaning control method includes:
controlling the camera to capture a first picture;
in response to a definition of the first picture being less than a preset standard definition, controlling the cleaning system to clean the camera;
controlling the camera to capture a second picture after cleaning the camera;
in response to a definition of the second picture being greater than or equal to a preset before-drying definition, controlling the air-cooling system to dry the camera; and
in response to the definition of the second picture being less than the preset before-drying definition, controlling the cleaning system to clean the camera again.

In an embodiment, the vehicle includes a windshield, and the cleaning control method further includes:
in response to the definition of the first picture being less than the preset standard definition, controlling the cleaning system to clean the windshield; and
in response to the definition of the second picture being less than the preset before-drying definition, controlling the cleaning system to clean the windshield again.

In an embodiment, in response to the definition of the first picture being less than the preset standard definition, controlling the cleaning system to clean the camera includes:
determining a road reference picture matching the definition of the first picture from a plurality of road reference pictures as a road matching picture; and
in response to a definition of the road matching picture being less than the preset standard definition, controlling the cleaning system to clean the camera.

In an embodiment, the cleaning control method further includes, after controlling the air-cooling system to dry the camera:
controlling the camera to capture a third picture; and
in response to a definition of the third picture being less than a standard drying definition, controlling the air-cooling system to dry the camera again.

In an embodiment, the cleaning control method further includes, after controlling the air-cooling system to dry the camera:
obtaining a moisture value of a surface of the camera; and
in response to the moisture value of the surface of the camera being greater than a preset standard moisture value, controlling the air-cooling system to dry the camera again.

In an embodiment, in response to the moisture value of the surface of the camera being greater than a preset standard moisture value, controlling the air-cooling system to dry the camera again includes:
in response to the moisture value of the surface of the camera being greater than the preset standard moisture value, determining a moisture difference between the moisture value and the standard moisture value;
determining, based on the moisture difference, drying duration of the air-cooling system; and
controlling the air-cooling system to dry the camera again for the drying duration.

In an embodiment, in response to the definition of the second picture being greater than or equal to the preset before-drying definition, controlling the air-cooling system to dry the camera includes:
obtaining a current moisture value of a surface of the camera;
determining a total moisture difference between the current moisture value and a preset standard moisture value;
determining, based on the total moisture difference, drying duration of the air-cooling system; and
controlling the air-cooling system to dry the camera for the drying duration.

In an embodiment, controlling the cleaning system to clean the vehicle includes:
controlling the camera to capture a road condition picture, where the road condition picture includes an oncoming vehicle picture, a pedestrian picture and a road parking indication picture;
determining, based on the road condition picture, environmental information, where the environmental information includes a number of oncoming vehicles, a number of pedestrians and a road parking indication sign;
in response to the environmental information not meeting a parking condition, controlling the vehicle to automatically drive to a road section meeting the parking condition, where the parking condition includes that: the number of oncoming vehicles is less than a preset number of oncoming vehicles, the number of pedestrians is less than a preset number of pedestrians, and the road parking indication sign is a preset sign allowing parking; and
controlling the cleaning system to clean the vehicle after the vehicle automatically drives to the road section meeting the parking condition.

In an embodiment, the cleaning system includes a cleaning switch, and the cleaning control method further includes:
in response to the cleaning switch being pressed for a preset duration, controlling the cleaning system to perform cleaning operation; and
in response to the cleaning switch being pressed again after release, controlling the cleaning system to stop the cleaning operation.

In an embodiment, there is provided a readable storage medium, storing computer programs thereon, where the computer programs, when executed by one or more processors, cause the one or more processors to perform the cleaning control method.

In an embodiment, there is provided a control system, including one or more processors for performing the cleaning control method.

In an embodiment, there is provided a vehicle, including a windshield, a cleaning system, an air-cooling system, a camera and the control system, where the control system is electrically connected to the cleaning system, the air-cooling system and the camera.

In an embodiment, the cleaning system includes a plurality of cleaning containers, one or more fluid leveling components and a liquid pump, the liquid pump is provided on the plurality of cleaning containers and electrically connected to the control system to pump out cleaning liquid from the plurality of cleaning containers, and the one or more fluid leveling components are provided between the plurality of cleaning containers to connect the plurality of cleaning containers, so as to maintain a pressure balance of the plurality of cleaning containers.

In an embodiment, the vehicle further includes a vehicle body, a length of each of the plurality of cleaning containers is more than a quarter of a width of the vehicle body, the plurality of cleaning containers include a first container and a second container, and the first container and the second container are respectively provided on a left side and a right side of a front part of the vehicle body.

In an embodiment, the camera includes a first camera, a second camera and a third camera, the first camera and the second camera are respectively provided on the left side and the right side of the front part of the vehicle body corresponding to the first container and the second container, and the third camera is provided on a top part of the vehicle body.

In an embodiment, the camera further includes a fourth camera and a fifth camera, and the fourth camera and the fifth camera are provided on a left side and a right side of a rear part of the vehicle body.

In an embodiment, the vehicle further includes a vehicle body, the cleaning system further includes a liquid pipe, one end of the liquid pipe is connected to the liquid pump, and the other end of the liquid pipe extends to the camera along an inner wall of the vehicle body to spray the cleaning liquid inside the plurality of cleaning containers to the camera, so as to clean the camera.

In an embodiment, the vehicle further includes a vehicle body and a windshield, the cleaning system further includes a liquid pipe, one end of the liquid pipe is connected to the liquid pump, and the other end of the liquid pipe extends to the windshield along an inner wall of the vehicle body to spray the cleaning liquid inside the plurality of cleaning containers to the windshield, so as to clean the windshield.

In an embodiment, each of the plurality of cleaning containers includes a container body and a plurality of silencing components, and the plurality of silencing components are provided in a wavy or honeycomb shape on an inner wall of the container body.

In an embodiment, each of the plurality of cleaning containers includes a container body and a filling device, the filling device is provided on an outer wall of the container body and communicated with an inside of the container body to fill the inside of the container body with the cleaning liquid.

In an embodiment, the filling device includes a flow tube and a filling cover, the flow tube is communicated with the inside of the container body, the filling cover is movably installed at one end of the flow tube far away from the inside of the container body, and the filling cover is capable of be opened relative to the flow tube.

In an embodiment, the cleaning system further includes a liquid level sensor, and the liquid level sensor is provided in each of the plurality of cleaning containers to detect a volume of the cleaning liquid in each of the plurality of cleaning containers.

In an embodiment, the vehicle further includes a vehicle body and an air-cooling device for air conditioning, and the air-cooling system includes an air duct, one end of the air duct is connected to the air-cooling device, and the other end of the air duct extends along the vehicle body to the camera to blow and dry the camera.

In an embodiment, the camera includes a first camera, a second camera, a fourth camera and a fifth camera around the vehicle body, and a third camera on a top part of the vehicle body, the cleaning system includes a liquid pipe, the air duct is consistent with an extension direction of the liquid pipe around an inner wall of the vehicle body, and the air duct and the liquid pipe are arranged, along the top part of the vehicle body, on both sides of the third camera.

The present disclosure provides a cleaning control method, the cleaning system is controlled to clean the camera when the definition of the first picture is lower than the preset standard definition by obtaining the first picture through the camera. This is beneficial for improving the accuracy of the vehicle in identifying its own cleanliness level and enhancing the efficiency of vehicle cleaning. By controlling the camera to obtain the second picture after cleaning the camera, when the definition of the second picture is greater than or equal to the preset before-drying definition, the air-cooling system is controlled to dry the camera. This is beneficial for the camera of the vehicle to be dried after cleaning, avoiding water droplets on the surface of the camera from obstructing its normal shooting function, and improving the operation accuracy of the camera, thereby enhancing the efficiency of automatic vehicle cleaning.

### BRIEF DESCRIPTION OF THE DRAWINGS

In order to more clearly illustrate the technical solutions in the examples of the present disclosure, the drawings used in the description of the examples will be briefly described below. It is obvious that the drawings in the following description are only some examples of the present disclosure, and other drawings may also be obtained from those of ordinary skill in the art in view of the drawings.
FIG. 1 is a flowchart illustrating a cleaning control method according to an embodiment of the present disclosure.
FIG. 2 is a flowchart illustrating a cleaning control method according to another embodiment of the present disclosure.
FIG. 3 is a flowchart illustrating steps of controlling the cleaning system to clean the camera in the cleaning control method shown in FIG. 1 according to an embodiment of the present disclosure.
FIG. 4 is a flowchart illustrating a cleaning control method according to yet another embodiment of the present disclosure.
FIG. 5 is a flowchart illustrating a cleaning control method according to still another embodiment of the present disclosure.
FIG. 6 is a flowchart illustrating steps of controlling the air-cooling system to dry the camera again in the cleaning control method shown in FIG. 5 according to an embodiment of the present disclosure.
FIG. 7 is a flowchart illustrating steps of controlling the air-cooling system to dry the camera in the cleaning control method shown in FIG. 1 according to an embodiment of the present disclosure.
FIG. 8 is a flowchart illustrating steps of controlling the cleaning system to clean the vehicle in the cleaning control method shown in FIG. 1 according to an embodiment of the present disclosure.
FIG. 9 is a flowchart illustrating a cleaning control method according to another embodiment of the present disclosure.
FIG. 10 is a block diagram illustrating a control system according to an embodiment of the present disclosure.
FIG. 11 is a schematic structural diagram illustrating a vehicle according to an embodiment of the present disclosure.
FIG. 12 is a schematic structural diagram illustrating a cleaning system of a vehicle according to an embodiment of the present disclosure.
FIG. 13 is a schematic structural diagram illustrating a vehicle according to another embodiment of the present disclosure.
FIG. 14 is a schematic structural diagram illustrating a vehicle according to yet another embodiment of the present disclosure.
FIG. 15 is a schematic structural diagram illustrating a cleaning container according to an embodiment of the present disclosure.
FIG. 16 is a schematic structural diagram illustrating a cleaning container according to another embodiment of the present disclosure.
FIG. 17 is a schematic structural diagram illustrating a filling device according to an embodiment of the present disclosure.
FIG. 18 is a schematic structural diagram illustrating a vehicle according to still another embodiment of the present disclosure.

### DETAILED DESCRIPTION OF THE EMBODIMENTS

The technical solutions in the examples of the present disclosure are clearly and completely described in the following with reference to the drawings in the examples of the present disclosure. It is obvious that the described examples are only a part of the examples of the present disclosure, and not all of the examples. Other examples achieved by those of ordinary skill in the art based on the examples in the present disclosure without paying creative work shall all fall within the scope of protection of the present disclosure.

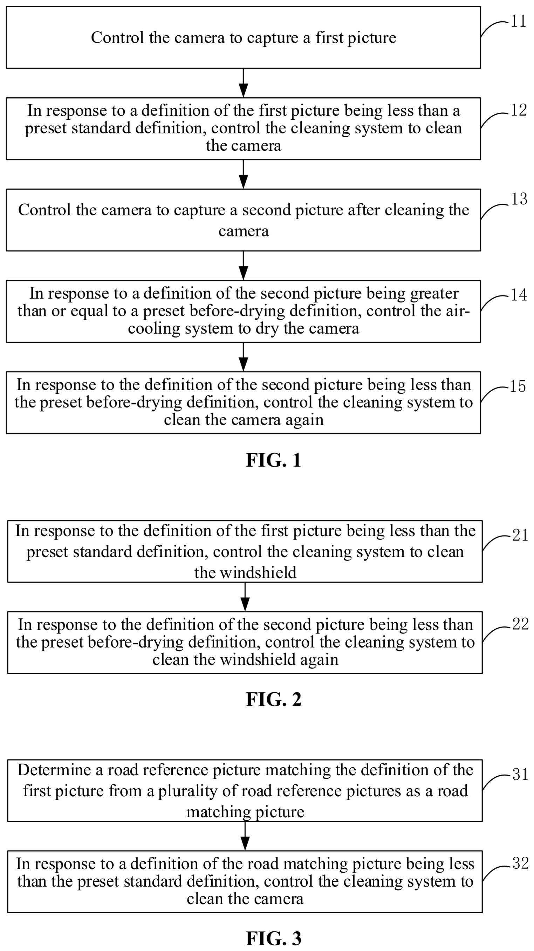

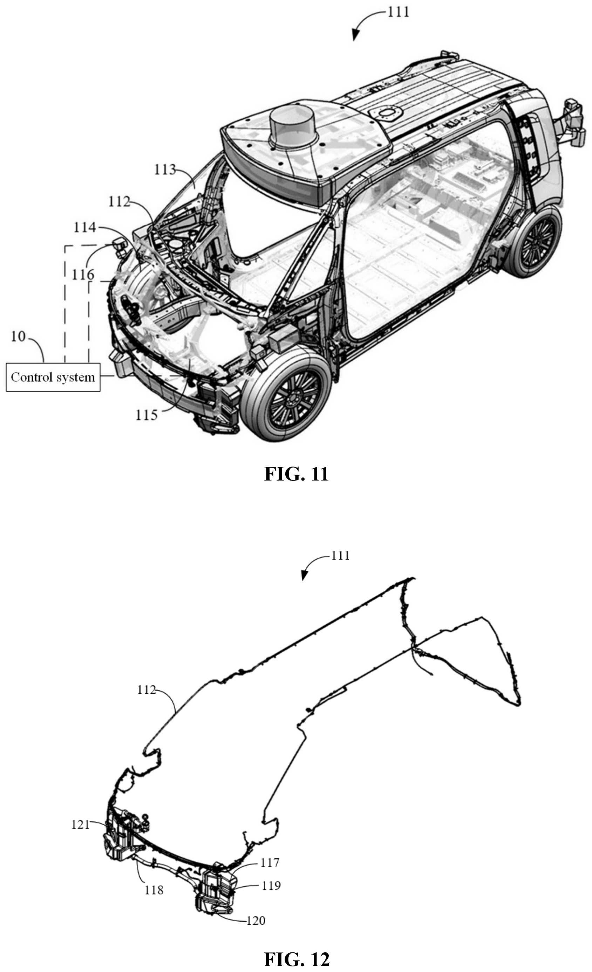

FIG. 1 is a flowchart illustrating a cleaning control method according to an embodiment of the present disclosure. FIG. 11 is a schematic structural diagram illustrating a vehicle according to an embodiment of the present disclosure. In the embodiment as shown in FIGS. 1 and 11, a cleaning control method for a vehicle 111 is provided, the vehicle 111 includes a vehicle body 112, a cleaning system 114 provided on the vehicle body 112, an air-cooling system 115 provided on the vehicle body 112 and a camera 116 provided outside the vehicle body 112, and the cleaning control method includes steps 11 to 15.

At step 11, the camera 116 is controlled to capture a first picture. The first picture may include a picture of any road section or the surrounding environment of the vehicle 111 and the vehicle 111 captured by the camera 116.

At step 12, in response to a definition of the first picture being less than a preset standard definition, the cleaning system 114 is controlled to clean the camera 116. The preset standard definition refers to a criterion set by the user for determining the cleanliness of the camera 116 in the case of dust accumulation of the camera 116 of the vehicle 111. If the definition of the first picture is less than the standard definition, it can be considered that the camera 116 is low in cleanliness and needs to be cleaned. If the definition of the first picture is greater than or equal to the standard definition, it can be considered that the camera 116 is in good cleanliness, and it is not necessary to clean the camera 116 at this time. Therefore, when the definition of the first picture is less than the preset standard definition, the cleaning system 114 is controlled to clean the camera 116. In some embodiments, the user can set the value of the standard definition according to habits of the user such as the cleaning frequency of the vehicle 111.

At step 13, the camera 116 is controlled to capture a second picture after cleaning the camera 116. The second picture may include a picture of any road section or the surrounding environment of the vehicle 111 and the vehicle 111 captured by the camera 116.

At step 14, in response to a definition of the second picture being greater than or equal to a preset before-drying definition, the air-cooling system 115 is controlled to dry the camera 116. After the camera 116 is cleaned, water droplets for cleaning are attached to the surface of the camera 116. The preset before-drying definition refers to a criterion set by the user for determining the cleanliness of the camera 116 after the camera 116 of the vehicle 111 is cleaned by the cleaning liquid. If the definition of the second picture is less than the preset before-drying definition, it can be considered that the water droplets attached to the surface of the camera 116 are still mixed with dust and other impurities, and the camera 116 is still dirty and needs to be cleaned. If the definition of the second picture is greater than or equal to the preset before-drying definition, it can be considered that the camera 116 has been cleaned and reached the cleanliness standard expected by the user. At this time, it is necessary to control the air-cooling system 115 to dry the camera 116 to remove water droplets on the surface of the camera 116, so as to facilitate the camera 116 to shoot normally.

At step 15, in response to the definition of the second picture being less than the preset before-drying definition, the cleaning system 114 is controlled to clean the camera 116 again. When the definition of the second picture is less than the preset before-drying definition, it is indicated that the water droplets attached to the surface of the camera 116 are mixed with more impurities, and the camera 116 still needs to be cleaned. At this time, it is necessary to control the cleaning system 114 to clean the camera 116 again.

FIG. 2 is a flowchart illustrating a cleaning control method according to another embodiment of the present disclosure. In the embodiment shown in FIG. 2, the vehicle 111 includes a windshield 113, and the cleaning control method further includes steps 21-22.

At step 21, in response to the definition of the first picture being less than the preset standard definition, the cleaning system 114 is controlled to clean the windshield 113. The definition of the first picture is less than the preset standard definition, which indicates that the windshield 113 is dirty at this time, and the cleanliness is low, so the windshield 113 needs to be cleaned. The windshield 113 is an important part for the user to observe the field of vision while driving, so it is necessary to control the cleaning system 114 to clean the windshield 113 when the vehicle 111 is dirty.

At step 22, in response to the definition of the second picture being less than the preset before-drying definition, the cleaning system 114 is controlled to clean the windshield 113 again. The definition of the second picture is less than the preset before-drying definition, which indicates that the water droplets on the surface of the cleaned windshield 113 are mixed with a lot of impurities. At this time, the windshield 113 is still dirty and needs to be cleaned again.

FIG. 3 is a flowchart illustrating steps of controlling the cleaning system 114 to clean the camera 116 in the cleaning control method shown in FIG. 1 according to an embodiment of the present disclosure. In the embodiment as shown in FIG. 3, in step 12, in response to the definition of the first picture being less than the preset standard definition, controlling the cleaning system 114 to clean the camera 116 includes steps 31 to 32.

At step 31, a road reference picture matching the definition of the first picture is determined from a plurality of road reference pictures as a road matching picture. The road reference pictures can be stored in advance, and different road reference pictures reflect different definition. The definition of the road matching picture selected from the plurality of road reference pictures can synchronously represent the definition of the first picture.

At step 32, in response to a definition of the road matching picture being less than the preset standard definition, the cleaning system 114 is controlled to clean the camera 116. The definition of the road matching picture is less than the preset standard definition, it is indicated that there is more dust on the surface of the camera 116 at this time, and the road matching picture have poor definition. Therefore, it is necessary to control the cleaning system 114 to clean the camera 116 to improve the shooting definition of the camera 116.

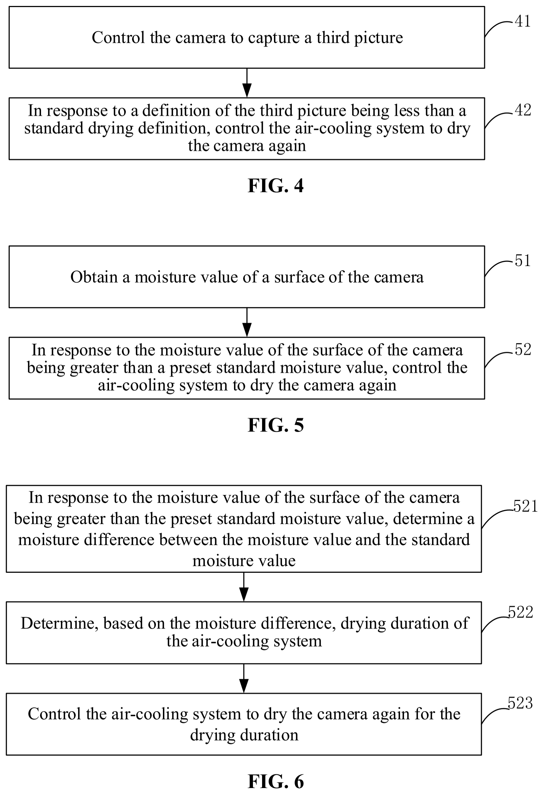

FIG. 4 is a flowchart illustrating a cleaning control method according to yet another embodiment of the present disclosure. In the embodiment as shown in FIG. 4, in step 14, the cleaning control method further includes, after controlling the air-cooling system 115 to dry the camera 116: steps 41 to 42.

At step 41, the camera 116 is controlled to capture a third picture. The third picture includes any road section or the surrounding environment of vehicle 111 captured by camera 116, as well as the picture of vehicle 111 itself. The third picture is captured by camera 116 after drying.

At step 42, in response to a definition of the third picture being less than a standard drying definition, the air-cooling system 115 is controlled to dry the camera again. If the definition of the third picture is less than the standard drying definition, it is indicated that there are still water droplets left on the camera 116, and it needs to be dried again to remove the water droplets to ensure the normal shooting function of the camera 116.

FIG. 5 is a flowchart illustrating a cleaning control method according to still another embodiment of the present disclosure. In the embodiment as shown in FIG. 5, in step 14, the cleaning control method further includes, after controlling the air-cooling system 115 to dry the camera 116: steps 51 to 52.

At step 51, a moisture value of a surface of the camera is obtained. The moisture value represents the amount of the cleaning liquid remaining on the surface of the camera 116.

At step 52, in response to the moisture value of the surface of the camera 116 being greater than a preset standard moisture value, the air-cooling system 115 is controlled to dry the camera 116 again. The standard moisture value is a moisture value of the surface that the camera 116 can work normally set by the user. If the moisture value of the surface of the camera 116 is greater than the standard moisture value, it means that there is more moisture on the surface of the camera 116, and the picture captured by the camera 116 have fuzzy water droplets, so it is necessary to dry the camera 116 again to remove water droplets and restore the normal shooting function of the camera 116. Correspondingly, if there are fewer water droplets, it means that the water droplets on the surface of the camera 116 have met the requirements of user, so it is not necessary to dry the camera 116 again.

FIG. 6 is a flowchart illustrating steps of controlling the air-cooling system 115 to dry the camera 116 again in the cleaning control method shown in FIG. 5 according to an embodiment of the present disclosure. In the embodiment as shown in FIG. 6, in step 52, in response to the moisture value of the surface of the camera 116 being greater than a preset standard moisture value, controlling the air-cooling system 115 to dry the camera 116 again includes steps 521 to 523.

At step 521, in response to the moisture value of the surface of the camera 116 being greater than the preset standard moisture value, a moisture difference between the moisture value and the standard moisture value is determined. The moisture difference between the determined moisture value and the standard moisture value can be used to characterize the wetting degree of the surface of the camera 116. The larger the moisture difference, the more water droplets cover the surface of the camera 116, resulting in less clear picture.

At step 522, drying duration of the air-cooling system 115 is determined based on the moisture difference. As described above, the greater the moisture difference, the more water droplets, and the longer the drying duration of the air-cooling system 115 determined according to the more water droplets.

At step 523, the air-cooling system 115 is controlled to dry the camera 116 again for the drying duration. After controlling the air-cooling system 115 to dry the camera 116 again for a drying duration, it is beneficial to remove residual water droplets and realize the drying of the camera 116, which is beneficial to the normal operation of the camera 116.

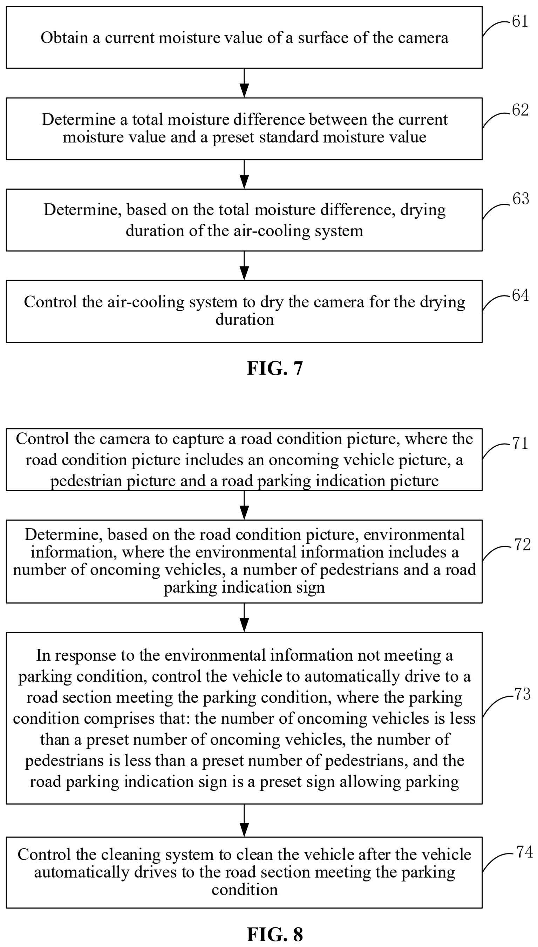

FIG. 7 is a flowchart illustrating steps of controlling the air-cooling system 115 to dry the camera 116 in the cleaning control method shown in FIG. 1 according to an embodiment of the present disclosure. In the embodiment as shown in FIG. 7, in step 14, in response to a definition of the second picture being greater than or equal to the preset before-drying definition, controlling the air-cooling system 115 to dry the camera 116 includes steps 61 to 64.

At step 61, a current moisture value of a surface of the camera 116 is obtained. The current moisture value represents the amount of residual moisture on the surface of the camera 116 after cleaning.

At step 62, a total moisture difference between the current moisture value and the preset standard moisture value is determined. The total moisture difference represents the difference between the wetting degree of the surface of the camera 116 and the wetting degree expected by the user.

At step 63, total drying duration of the air-cooling system 115 is determined based on the total moisture difference. The greater the total moisture difference, the more moisture on the surface of the camera 116, and the greater the difference from the dryness expected by the user, so the camera 116 needs to be dried, and the corresponding total drying duration is longer.

At step 64, the air-cooling system 115 is controlled to dry the camera 116 for the total drying duration. The total drying duration is the determined time required for the camera 116 to blow and dry. Controlling the camera 116 to dry to achieve the total drying duration is conducive to removing water droplets on the surface of the camera 116 and facilitating the camera 116 to shoot normally again.

FIG. 8 is a flowchart illustrating steps of controlling the cleaning system 114 to clean the vehicle 111 in the cleaning control method shown in FIG. 1 according to an embodiment of the present disclosure. In the embodiment as shown in FIG. 8, in step 12, controlling the cleaning system 114 to clean the vehicle 111 includes steps 71 to 74.

At step 71, the camera 116 is controlled to capture a road condition picture, where the road condition picture includes an oncoming vehicle picture, a pedestrian picture and a road parking indication picture. The road picture can be used to represent the road environment where the vehicle 111 is located at this time, including information such as whether the road environment is crowded and safe.

At step 72, environmental information is determined based on the road condition picture, where the environmental information includes a number of oncoming vehicles, a number of pedestrians and a road parking indication sign. The road parking indication sign can be all kinds of road parking signs, indicator lights, etc. manually input by the user.

At step 73, in response to the environmental information not meeting a parking condition, the vehicle 111 is controlled to automatically drive to a road section meeting the parking condition, where the parking condition includes that: the number of oncoming vehicles is less than a preset number of oncoming vehicles, the number of pedestrians is less than a preset number of pedestrians, and the road parking indication sign is a preset sign allowing parking. In some embodiments, the parking condition can only be met when the number of incoming vehicles is less than the preset number of incoming vehicles, the number of pedestrians is less than the preset number of pedestrians and the road parking indication sign is the preset sign that allows parking. In order to meet the parking condition in the present disclosure, if any of the above conditions are not met, parking of the vehicle 111 may affect road traffic at this time, so it is necessary to control the vehicle 111 to automatically drive to the road section that meets the parking condition to stop, so as to avoid affecting the normal traffic of other vehicles 111 and pedestrians.

At step 74, the cleaning system 114 is controlled to clean the vehicle 111 after the vehicle 111 automatically drives to the road section meeting the parking condition. Cleaning the vehicle 111 on the road section that meets the parking condition is beneficial to reduce the impact on pedestrians and other vehicles 111 during the cleaning process of the vehicle 111.

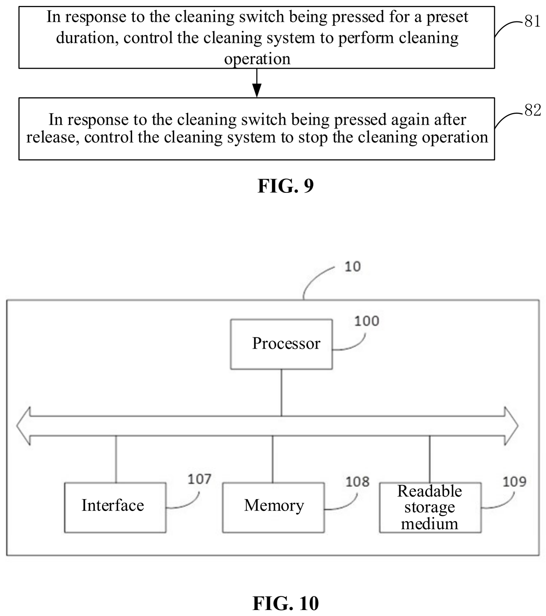

FIG. 9 is a flowchart illustrating a cleaning control method according to another embodiment of the present disclosure. In the embodiment shown in FIG. 9, the cleaning system 114 includes a cleaning switch, and the cleaning control method further includes steps 81 to 82.

At step 81, in response to the cleaning switch being pressed for a preset duration, the cleaning system is controlled to perform cleaning operation. When the user subjectively determines that the vehicle 111 needs to be cleaned, the user can press the cleaning switch to control the cleaning system 114 to clean the vehicle 111. In some embodiments, the user needs to press the cleaning switch for more than one second to avoid the situation that the user touches the cleaning switch by mistake.

At step 82, in response to the cleaning switch being pressed again after release, the cleaning system is controlled to stop the cleaning operation. During the cleaning process of the cleaning system 114, the user can press the cleaning switch again to control the cleaning system 114 to stop cleaning.

FIG. 10 is a block diagram illustrating a control system 10 according to an embodiment of the present disclosure. In the embodiment as shown in FIG. 10, there is provided a readable storage medium 109, storing computer programs thereon, where the computer programs, when executed by one or more processors 100, cause the one or more processors to perform the cleaning control method.

In some embodiments, the present disclosure provides a control system 10, the control system 10 may include a readable storage medium 109, and the readable storage medium 109 may store programs that can be called by the one or more processors 100, and may include a nonvolatile storage medium. In some embodiments, the control system 10 may include a memory 108 and an interface 107. In some embodiments, the control system 10 may also include other hardware according to the actual application.

This application may take the form of a computer program product implemented on one or more storage media (including but not limited to disk storage, a CD-ROM, an optical storage, etc.) containing program codes. The readable storage medium includes permanent and non-permanent, removable and non-removable media, and information can be stored by any method or technology. The information can be computer readable instructions, data structures, modules of programs, or other data. Examples of storage medium for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only compact disc only Read Memory (CD-ROM), digital versatile disc (DVD) or other optical storage, magnetic cartridge tape, magnetic tape disk storage or other magnetic storage device or any other non-transport medium that can be used to store information that can be accessed by computing devices. Those skilled in the art will readily conceive other embodiments of the present disclosure upon consideration of the specification and practice of the various embodiments disclosed herein. The disclosure is intended to cover any variations, uses, or adaptations of the present disclosure following general principles of the present disclosure and include the common general knowledge or common technical means in the art without departing from the present disclosure. The specification and examples are indicated by the appended claims.

FIG**.** 11 is a schematic structural diagram illustrating a vehicle 111 according to an embodiment of the present disclosure. In the embodiment as shown in FIG. 11, the present disclosure provides a vehicle 111, the vehicle 111 includes a windshield 113, a cleaning system 114, an air-cooling system 115, a camera 116 and a control system 10, where the control system 10 is electrically connected to the cleaning system 114, the air-cooling system 115 and the camera 116. The control system 10 obtains the first picture transmitted by the camera 116 and analyzes the definition of the first picture. When the definition of the first picture transmitted by the camera 116 is less than the preset standard definition, the control system 10 controls the cleaning system 114 to clean the camera 116. The control system 10 obtains the second picture transmitted by the camera 116 again and analyzes the definition of the second picture, and then controls the air-cooling system 115 to dry the camera 116 when the definition is greater than the preset before-drying definition, so as to keep the camera 116 dry and realize normal shooting.

FIG. 12 is a schematic structural diagram illustrating a cleaning system 114 of a vehicle 111 according to an embodiment of the present disclosure. In the embodiment as shown in FIG. 12, the cleaning system 114 includes a plurality of cleaning containers 117, one or more fluid leveling components 118 and a liquid pump 119, the liquid pump 119 is provided on the plurality of cleaning containers 117 and electrically connected to the control system 10 to pump out cleaning liquid from the plurality of cleaning containers 117, and the one or more fluid leveling components 118 are provided between the plurality of cleaning containers 117 to connect the plurality of cleaning containers 117, so as to maintain a pressure balance of the plurality of cleaning containers 117. The plurality of cleaning container 117 contain cleaning liquid which can be used to clean the camera 116. The control system 10 controls the liquid pump 119 to pump the cleaning liquid from the plurality of cleaning containers 117 to clean the camera 116. Since there are the plurality of cleaning containers 117, the air pressure between the cleaning containers 117 can be adjusted by installing the fluid leveling component 118, so that the air pressure inside the cleaning containers 117 can be kept stable and the cleaning liquid can be pumped out stably.

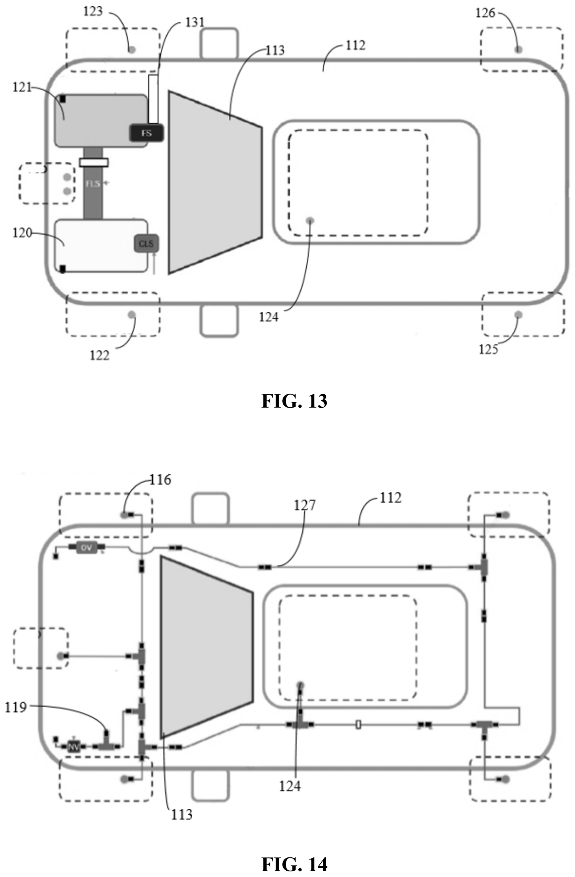

FIG**.** 13 is a schematic structural diagram illustrating a vehicle 111 according to another embodiment of the present disclosure. In the embodiment as shown in FIG. 13, a length of each of the plurality of cleaning containers 117 is more than a quarter of a width of the vehicle body 112, the plurality of cleaning containers 117 include a first container 120 and a second container 121, and the first container 120 and the second container 121 are respectively provided on a left side and a right side of a front part of the vehicle body 112. The length of the cleaning container 117 is more than a quarter of the width of the vehicle body 112. Compared with the conventional cleaning container, the cleaning container 117 has a larger capacity and can carry more cleaning liquid, thus avoiding the user from adding cleaning liquid frequently. Moreover, the cleaning container 117 is transparent, which is convenient for the users to observe the volume of the cleaning liquid inside the cleaning container 117, so as to avoid the situation where there is insufficient cleaning liquid to perform cleaning operation.

In an embodiment, the camera 116 includes a first camera 122, a second camera 123 and a third camera 124, the first camera 122 and the second camera 123 are respectively provided on the left side and the right side of the front part of the vehicle body 112 corresponding to the first container 120 and the second container 121, and the third camera 124 is provided on a top part of the vehicle body 112. The first camera 122 and the second camera 123 are arranged on the left side and the right side of the front part of the vehicle body 112 corresponding to the first container 120 and the second container 121, so that the camera 116 can be cleaned symmetrically from the left side and the right side to fully clean the camera 116. At the same time, the cleaning liquid in the first container 120 and the second container 121 can also be used to clean the third camera 124 at the top part of the vehicle body 112. In some embodiments, the first camera 122 and the second camera 123 are arranged on the left side and the right side of the front part of the vehicle body 112 to shoot the road conditions on the left side and the right side of the front part of the vehicle body 111, and the third camera 124 arranged on the top part of the vehicle body 112 can be used to prospectively shoot the road conditions ahead from a higher perspective, which is convenient for the control system 10 to determine the road conditions more accurately.

In some embodiments, the camera 116 further includes a fourth camera 125 and a fifth camera 126, and the fourth camera 125 and the fifth camera 126 are provided on a left side and a right side of a rear part of the vehicle body 112. The fourth camera 125 and the fifth camera 126 can be used to shoot the road conditions on the left side and the right side of the rear part of the vehicle body 112, and cooperate with the first camera 122, the second camera 123 and the third camera 124 to obtain the road condition pictures from all perspectives of the vehicle body 112.

FIG. 14 is a schematic structural diagram illustrating a vehicle 111 according to yet another embodiment of the present disclosure. In the embodiment as shown in FIG. 4, the cleaning system 114 further includes a liquid pipe 127, one end of the liquid pipe 127 is connected to the liquid pump 119, and the other end of the liquid pipe 127 extends to the windshield 113 along an inner wall of the vehicle body 112 to spray the cleaning liquid inside the plurality of cleaning containers 117 to the windshield 113, so as to clean the windshield 113. The liquid pipe 127 is provided to extend along the inner wall of the vehicle body 112 to the camera 116, which is beneficial for reducing the space occupied by the liquid pipe 127 inside the vehicle body 112, and improving the aesthetics of the vehicle body 112 when using the liquid pipe 127 to supply the cleaning liquid to the camera 116. In some embodiments, a plurality of liquid holes are arranged on the outer wall of the camera 116 and at the edge of the windshield 113, and the liquid holes are connected with the liquid pipe 127, and the cleaning liquid transmitted by the liquid pipe 127 is sprayed to the camera 116 and the windshield 113 through the liquid holes to clean the camera 116 and the windshield 113.

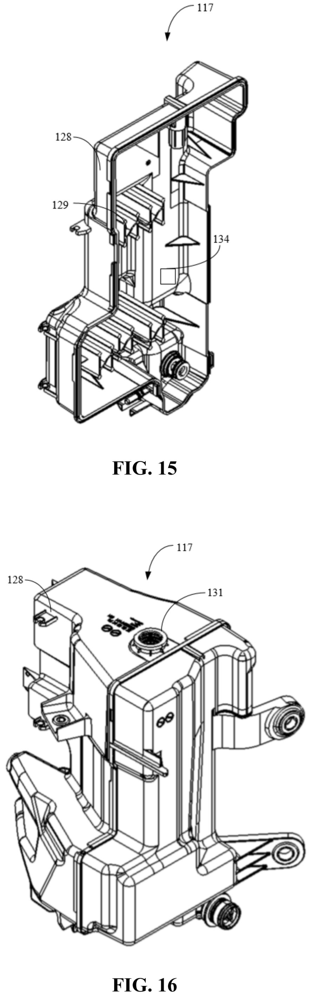

FIG. 15 is a schematic structural diagram illustrating a cleaning container 117 according to another embodiment of the present disclosure. In the embodiment as shown in FIG. 15, each of the plurality of cleaning containers 117 includes a container body 128 and a plurality of silencing components 129, and the plurality of silencing components 129 are provided in a wavy or honeycomb shape on an inner wall of the container body 128. Because the cleaning container 117 is large, it carries more cleaning liquid, and the noise generated when the liquid pump 119 pumps the cleaning liquid from the cleaning container 117 is relatively large, the silencing component 129 in the wavy or honeycomb shape is provided, which effectively avoids the influence of the noise generated when the liquid pump 119 pumps the cleaning liquid on the experience of the user when the vehicle 111 is cleaned, and is beneficial to improving the comfort of the user.

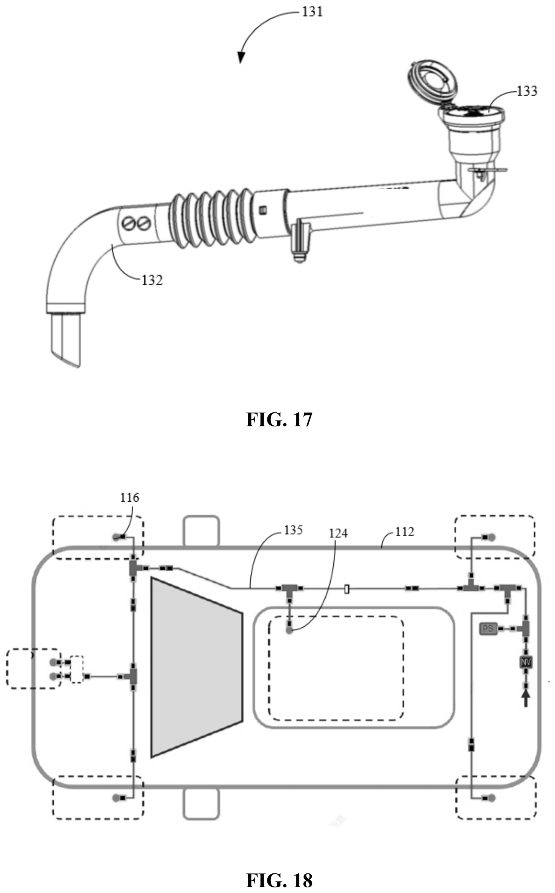

FIG**.** 16 is a schematic structural diagram illustrating a cleaning container 117 according to another embodiment of the present disclosure. FIG. 17 is a schematic structural diagram illustrating a filling device 131 according to an embodiment of the present disclosure. In some embodiment, each of the plurality of cleaning containers 117 includes a container body 128 and a filling device 131, the filling device 131 is provided on an outer wall of the container body 128 and communicated with an inside of the container body 128 to fill the inside of the container body 128 with the cleaning liquid. By replenishing the cleaning liquid into the filling device 131, the user can avoid cleaning the vehicle 111 without the cleaning liquid, and avoid the tedious process of disassembling the cleaning container 117 to add the cleaning liquid, which is beneficial to improve the replenishment efficiency of the cleaning liquid and the cleaning efficiency of the vehicle 111.

In some embodiment, the filling device 131 includes a flow tube 132 and a filling cover 133, the flow tube 132 is communicated with the inside of the container body 128, the filling cover 133 is movably installed at one end of the flow tube 132 far away from the inside of the container body 128, and the filling cover 133 is capable of be opened relative to the flow tube 132. The user can add cleaning liquid into the flow tube 132 by opening the filling cover 133, so as to add the cleaning liquid into the cleaning container 117 for cleaning the vehicle 111.

In the embodiment as shown in FIG. 15, the cleaning system 114 further includes a liquid level sensor 134, and the liquid level sensor 134 is provided in each of the plurality of cleaning containers 117 to detect a volume of the cleaning liquid in each of the plurality of cleaning containers 117. In some embodiments, the liquid level sensor 134 can be arranged on the side wall of the cleaning container 117 or at the bottom part of the cleaning container 117. The liquid level sensor 134 can convert the measured volume of residual cleaning liquid in the cleaning container 117 into an electrical signal and transmit it to the control system 10, and the control system 10 will give an alarm prompt accordingly, so as to facilitate the user to add the cleaning liquid in time when the volume of residual cleaning liquid is insufficient and ensure the normal operation of the cleaning system 114.

FIG. 18 is a schematic structural diagram illustrating a vehicle according to still another embodiment of the present disclosure. In the embodiment as shown in FIG. 18, the vehicle 111 further includes a vehicle body 112 and an air-cooling device for air conditioning, and the air-cooling system 115 includes an air duct 135, one end of the air duct 135 is connected to the air-cooling device, and the other end of the air duct 135 extends along the vehicle body 112 to the camera 116 to blow and dry the camera. The air duct 135 can extend air for air conditioning of the vehicle 111 to the camera 116, which is beneficial to saving the air-cooling cost of the camera 116 and avoiding occupying the space of the vehicle 111. The air duct 135 is provided to extend along the inner wall of the vehicle body 112 to the camera 116, which is beneficial for reducing the space occupied by the air duct 135 inside the vehicle body 112, and improving the aesthetics of the vehicle body 112. In some embodiments, the outer wall of the camera 116 is provided with a plurality of vent holes, which are connected with an air duct 135, and the air duct 135 transmits the air of the air-cooling system 115 to the camera 116 through the vent holes to dry the camera 116.

In the embodiment shown in FIGS. 14 and 18, the air duct 135 and the liquid pipe 127 extend in the same direction along the inner wall around the vehicle body 112. The air duct 135 and the liquid pipe 127 extend in the same direction and are laid along the same path, which is beneficial to reduce the space occupied by the air duct 135 and the liquid pipe 127 in the vehicle body 112. The air duct 135 and the liquid pipe 127 extend along the top part of the vehicle body 112 and are arranged on both sides of the third camera 124. The liquid pipe 127 and the air duct 135 extending to the top part of the vehicle body 112 are respectively arranged on both sides of the third camera 124, which is beneficial to optimizing the distribution path of the air duct 135 and the liquid pipe 127 and improving the cleaning and drying efficiency of the third camera 124.

Since the embodiments of the apparatus substantially corresponds to the embodiments of the method, relevant parts may be referred to the description of the embodiments of the method. The examples of apparatuses described above are merely illustrative and the units described as separate components may be or not be physically separated, and the components displayed as units may be or not be physical units, i.e., may be located in one place, or may be distributed to a plurality of network units. Part or all of the modules may be selected according to actual requirements to implement the objectives of the solutions in the examples. It may be understood and implemented by those skilled in the art without creative work.

It shall be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above are detailed description of a method and a device provided according to the examples of the present disclosure. Specific examples are used herein to set forth the principles and the implementing methods of the present disclosure, and the descriptions of the above examples are only meant to help understanding of the method and the core idea of the present disclosure. Meanwhile, those of ordinary skill in the art may make alterations to the specific examples and the scope of application in accordance with the idea of the present disclosure. In conclusion, the contents of the present specification shall not be interpreted as limiting the present disclosure.

## Claims

1. A cleaning control method for a vehicle comprising a vehicle body, a cleaning system provided on the vehicle body, an air-cooling system provided on the vehicle body and a camera provided outside the vehicle body, comprising:
controlling the camera to capture a first picture;
in response to a definition of the first picture being less than a preset standard definition, controlling the cleaning system to clean the camera;
controlling the camera to capture a second picture after cleaning the camera;
in response to a definition of the second picture being greater than or equal to a preset before-drying definition, controlling the air-cooling system to dry the camera; and
in response to the definition of the second picture being less than the preset before-drying definition, controlling the cleaning system to clean the camera again.

2. The cleaning control method of claim 1, wherein the vehicle comprises a windshield, and
wherein the cleaning control method further comprises:
in response to the definition of the first picture being less than the preset standard definition, controlling the cleaning system to clean the windshield; and
in response to the definition of the second picture being less than the preset before-drying definition, controlling the cleaning system to clean the windshield again.

3. The cleaning control method of claim 1, wherein in response to the definition of the first picture being less than the preset standard definition, controlling the cleaning system to clean the camera comprises:
determining a road reference picture matching the definition of the first picture from a plurality of road reference pictures as a road matching picture; and
in response to a definition of the road matching picture being less than the preset standard definition, controlling the cleaning system to clean the camera.

4. The cleaning control method of claim 1, further comprising, after controlling the air-cooling system to dry the camera:
controlling the camera to capture a third picture; and
in response to a definition of the third picture being less than a standard drying definition, controlling the air-cooling system to dry the camera again.

5. The cleaning control method of claim 1, further comprising, after controlling the air-cooling system to dry the camera:
obtaining a moisture value of a surface of the camera; and
in response to the moisture value of the surface of the camera being greater than a preset standard moisture value, controlling the air-cooling system to dry the camera again.

6. The cleaning control method of claim 5, wherein in response to the moisture value of the surface of the camera being greater than the preset standard moisture value, controlling the air-cooling system to dry the camera again comprises:
in response to the moisture value of the surface of the camera being greater than the preset standard moisture value, determining a moisture difference between the moisture value and the standard moisture value;
determining, based on the moisture difference, drying duration of the air-cooling system; and
controlling the air-cooling system to dry the camera again for the drying duration.

7. The cleaning control method of claim 1, wherein in response to the definition of the second picture being greater than or equal to the preset before-drying definition, controlling the air-cooling system to dry the camera comprises:
obtaining a current moisture value of a surface of the camera;
determining a total moisture difference between the current moisture value and a preset standard moisture value;
determining, based on the total moisture difference, drying duration of the air-cooling system; and
controlling the air-cooling system to dry the camera for the drying duration.

8. The cleaning control method of claim 1, wherein controlling the cleaning system to clean the vehicle comprises:
controlling the camera to capture a road condition picture, wherein the road condition picture comprises an oncoming vehicle picture, a pedestrian picture and a road parking indication picture;
determining, based on the road condition picture, environmental information, wherein the environmental information comprises a number of oncoming vehicles, a number of pedestrians and a road parking indication sign;
in response to the environmental information not meeting a parking condition, controlling the vehicle to automatically drive to a road section meeting the parking condition, wherein the parking condition comprises that: the number of oncoming vehicles is less than a preset number of oncoming vehicles, the number of pedestrians is less than a preset number of pedestrians, and the road parking indication sign is a preset sign allowing parking; and
controlling the cleaning system to clean the vehicle after the vehicle automatically drives to the road section meeting the parking condition.

9. The cleaning control method of claim 1, wherein the cleaning system comprises a cleaning switch, and
wherein the cleaning control method further comprises:
in response to the cleaning switch being pressed for a preset duration, controlling the cleaning system to perform cleaning operation; and
in response to the cleaning switch being pressed again after release, controlling the cleaning system to stop the cleaning operation.

10. A readable storage medium, storing computer programs thereon, wherein the computer programs, when executed by one or more processors, cause the one or more processors to perform the cleaning control method of any one of claims 1 to 9.

11. A control system, comprising one or more processors for performing the cleaning control method of any one of claims 1 to 9.

12. A vehicle, comprising a windshield, a cleaning system, an air-cooling system, a camera and the control system of claim 11, wherein the control system is electrically connected to the cleaning system, the air-cooling system and the camera.

13. The vehicle of claim 12, wherein the cleaning system comprises a plurality of cleaning containers, one or more fluid leveling components and a liquid pump, the liquid pump is provided on the plurality of cleaning containers and electrically connected to the control system to pump out cleaning liquid from the plurality of cleaning containers, and the one or more fluid leveling components are provided between the plurality of cleaning containers to connect the plurality of cleaning containers, so as to maintain a pressure balance of the plurality of cleaning containers.

14. The vehicle of claim 13, further comprising a vehicle body, a length of each of the plurality of cleaning containers is more than a quarter of a width of the vehicle body, the plurality of cleaning containers comprise a first container and a second container, and the first container and the second container are respectively provided on a left side and a right side of a front part of the vehicle body.

15. The vehicle of claim 14, wherein the camera comprises a first camera, a second camera and a third camera, the first camera and the second camera are respectively provided on the left side and the right side of the front part of the vehicle body corresponding to the first container and the second container, and the third camera is provided on a top part of the vehicle body.

16. The vehicle of claim 13, wherein the camera further comprises a fourth camera and a fifth camera, and the fourth camera and the fifth camera are provided on a left side and a right side of a rear part of the vehicle body.

17. The vehicle of claim 13, further comprising a vehicle body, the cleaning system further comprises a liquid pipe, one end of the liquid pipe is connected to the liquid pump, and the other end of the liquid pipe extends to the camera along an inner wall of the vehicle body to spray the cleaning liquid inside the plurality of cleaning containers to the camera, so as to clean the camera.

18. The vehicle of claim 13, further comprising a vehicle body and a windshield, the cleaning system further comprises a liquid pipe, one end of the liquid pipe is connected to the liquid pump, and the other end of the liquid pipe extends to the windshield along an inner wall of the vehicle body to spray the cleaning liquid inside the plurality of cleaning containers to the windshield, so as to clean the windshield.

19. The vehicle of claim 13, wherein each of the plurality of cleaning containers comprises a container body and a plurality of silencing components, and the plurality of silencing components are provided in a wavy or honeycomb shape on an inner wall of the container body.

20. The vehicle of claim 13, wherein each of the plurality of cleaning containers comprises a container body and a filling device, and the filling device is provided on an outer wall of the container body and communicated with an inside of the container body to fill the inside of the container body with the cleaning liquid.

21. The vehicle of claim 20, wherein the filling device comprises a flow tube and a filling cover, the flow tube is communicated with the inside of the container body, the filling cover is movably installed at one end of the flow tube far away from the inside of the container body, and the filling cover is capable of be opened relative to the flow tube.

22. The vehicle of claim 13, wherein the cleaning system further comprises a liquid level sensor, and the liquid level sensor is provided in each of the plurality of cleaning containers to detect a volume of the cleaning liquid in each of the plurality of cleaning containers.

23. The vehicle of claim 12, further comprising a vehicle body and an air-cooling device for air conditioning, and the air-cooling system comprises an air duct, one end of the air duct is connected to the air-cooling device, and the other end of the air duct extends along the vehicle body to the camera to blow and dry the camera.

24. The vehicle of claim 23, wherein the camera comprises a first camera, a second camera, a fourth camera and a fifth camera around the vehicle body, and a third camera on a top part of the vehicle body, the cleaning system comprises a liquid pipe, an extension direction of the air duct is consistent with an extension direction of the liquid pipe around an inner wall of the vehicle body, and the air duct and the liquid pipe are arranged along both sides of the third camera on the top part of the vehicle body.
